# NOUVEAU FASCICULE DE BREVET EUROPEEN

(11) **EP 0 604 308 B2**
(45) Date de publication et mention de la décision concernant l'opposition: **21.03.2001**
(45) Mention de la délivrance du brevet: 08.10.1997
(21) Numéro de dépôt: 93403128.7
(22) Date de dépôt: 21.12.1993
(51) Int. Cl.: F28F 27/00, G05D 23/02, A01J 9/04

(54) **Echangeur de chaleur et application au refroidissement du lait provenant de la traite**
Wärmetauscher und Anwendung zur Kühlung von Milch aus einer Melkanlage
Heat exchanger and use for cooling milk from milking system

(30) Priorité: 23.12.1992 FR 9215600
(43) Date de publication de la demande: 29.06.1994
(73) Titulaire: FRIGELAIT, 35370 Argentre du Plessis (FR)
(72) Inventeur: Monmousseau, Serge Jean-Claude, F-22100 Dinan (FR)
(74) Mandataire: Martin, Jean-Jacques

(56) Documents cités:
- EP-A- 0 111 673
- DD-A- 145 319
- FR-A- 2 526 145
- FR-A- 2 555 019
- GB-A- 2 067 723
- GB-A- 2 202 033
- SU-A- 986 356
- US-A- 1 406 922
- US-A- 1 521 475
- US-A- 2 805 025
- US-A- 3 207 434
- US-A- 4 013 043
- US-A- 4 086 956
- US-A- 4 637 454

## Description

La présente invention concerne le domaine des échangeurs thermiques du type decrit dans le préamble de la revendication 1.

On a déjà proposé de nombreux dispositifs formant échangeurs thermiques.

Les échangeurs thermiques connus comprennent généralement deux voies en relation d'échange thermi-que, qui reçoivent respectivement un fluide primaire notamment de l'eau ser-vant de fluide de refroidissement et un fluide secondaire notamment du lait à refroidir.

La présente invention s'applique au traitement du lait circulant de façon impulsionnelle, voire aléatoire, dans l'échangeur. Cette application sera précisée par la suite.

Le problème principal posé par le traitement thermique du lait à flux impulsionnel est celui de la régulation du débit de l'eau. Il est généralement très important d'obtenir, en sortie de l'échangeur, du lait à température constante quel que soit le débit de celui-ci.

A cet effet on a proposé jusqu'ici de détecter la température du lait en sortie de l'échangeur, à l'aide d'une sonde électrique thermosensible, et de piloter une vanne de régulation à commande électrique placée sur le circuit de l'eau, grâce au signal de sortie de ladite sonde thermosensible.

De tels systèmes ont déjà rendu de grands services. Toutefois ils ne donnent pas toujours satisfaction. Ces systèmes connus sont généralement complexes et coûteux. De plus ils présentent souvent un temps de réponse non négligeable.

Le document DD-A-145319 décrit une autre variante d'installation de refroidissement de lait comprenant une vanne de régulation 3 voies à commande électrique sur la sortie du circuit primaire d'eau et une sonde électrique thermosensible placée en aval sur la sortie du circuit primaire et qui pilote la vanne précitée. La vanne de régulation 3 voies permet ainsi de réinjecter de l'eau chaude issue d'un condenseur d'un système thermique annexe, dans la sortie du circuit primaire, si nécessaire.

La présente invention a maintenant pour but principal de permettre une régulation précise de la température du lait à la sortie de l'échangeur.

Un autre but auxiliaire de la présente invention est de permettre de réguler non seulement la température du lait, mais également la température de l'eau, à la sortie de l'échangeur.

Ce but est atteint dans le cadre de la présente invention grâce à une installation répondant aux caractéristiques de la revendication 1, laquelle est délimitée sous forme de préambule et de partie caractérisante par rapport au document DD-A-145 319.

D'autres caractéristiques, buts et avantages de la présente invention apparaitront à la lecture de la description détaillée qui va suivre et en regard des dessins annexés, donnés à titre d'exemples non limitatifs et sur lesquels :
- la figure 1 représente une vue schématique d'un échangeur conforme à la présente invention,
- la figure 2 représente une variante de réalisation d'un échangeur conforme à la présente invention et
- la figure 3 représente une application de la présente invention au refroidissement du lait pendant la traite.

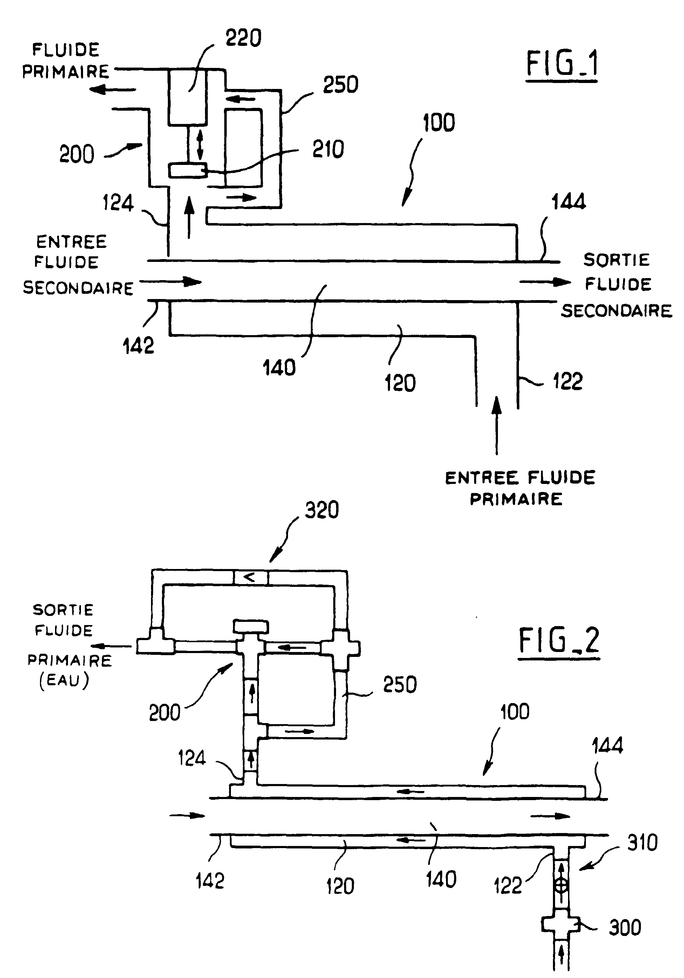

On aperçoit sur la figure 1 annexée un échangeur de chaleur 100 comprenant deux voies 120 et 140 recevant respectivement un fluide primaire et un fluide secondaire.

L'entrée de la voie primaire 120 est référencée 122, sa sortie 124.

L'entrée de la voie secondaire 140 est référencée 142, sa sortie 144.

Le fluide primaire est formé d'eau utilisée pour le refroidissement du fluide secondaire composé de lait chaud provenant de la traite.

De préférence les deux fluides primaire et secondaire circulent à contre-courant dans l'échangeur 100, comme on l'a schématisé sur la figure 1.

L'échangeur 100 peut être formé en lui même de toutes structures connues de l'homme de l'art.

Il peut s'agir par exemple d'un échangeur à plaques, ou encore d'un échangeur tubulaire, tel que l'échangeur comprenant deux tubes concentriques en spirale décrit dans les documents FR-A-2 532 154 et FR-A-2 526 145.

Comme on le voit par ailleurs sur la figure 1, dans le cadre de la présente invention, le système comprend en outre une vanne mécanique de régulation thermostatique 200 placée sur le circuit 120 du fluide primaire.

Plus précisément la vanne 200 est placée en aval de la sortie 124 du circuit primaire 120. Plus précisément encore, de préférence, la vanne 200 est placée au plus près de la sortie 124 du circuit primaire 120.

La vanne 200 comprend un obturateur régulateur de débit 210 piloté par un organe à géométrie variable thermosensible 220. L'obturateur 210 a la forme générale d'un clapet placé en regard d'un siège réalisé sur le carter de la vanne 200.

De plus comme représenté sur la figure 1 annexée il est prévu une voie 250 raccordée sur le circuit du fluide primaire 120, en dérivation de l'obturateur régulateur de débit 210, de sorte que ledit organe à géométrie variable thermosensible 220 soit placé en permanence dans un écoulement du fluide primaire traversant l'échangeur 100. L'organe 220 est placé en aval de l'obturateur 210.

Des vannes comprenant un obturateur régulateur de débit piloté par un organe à géométrie variable thermosensible, généralement thermodilatable, sont bien connues en elle même par exemples des documents FR-A-2 602 502, FR-A-2 174 135 ou FR-A-2 295 327. Pour ces raisons on ne décrira pas plus en détail par la suite la structure de la vanne 200.

L'homme de l'art comprendra en effet que cette vanne 200 peut être formée d'un mélangeur thermostatique classique du type décrit dans les documents précités, en reliant la sortie 124 du circuit primaire sur l'entrée de fluide froid du mélangeur et en reliant la voie de dérivation 250 sur l'entrée de fluide chaud du même mélangeur.

De préférence comme celà est connu pour les mélangeurs classiques décrits dans les documents FR-A-2 602 502, FR-A-2 174 135 ou FR-A-2 295 327, la vanne 200 comprend des moyens permettant de régler la température de consigne du fluide sortant par la sortie de ladite vanne 200. De tels moyens de réglage peuvent agir sur l'organe 220 ou sur la liaison définie entre cet organe 220 et l'obturateur 210.

Le fonctionnement du système représenté sur la figure 1 annexée et précédemment décrit est pour l'essentiel le suivant.

L'organe 220 de la vanne 200 est réglé pour définir à sa sortie une température prédéterminée du fluide primaire, laquelle température prédéterminée correspond à une température de consigne pour le fluide secondaire compte-tenu des relations d'échange thermique entre les voies primaire 120 et secondaire 140.

L'organe 220 de la vanne 200 est parcouru en permanence par un filet continu du fluide primaire.

Par conséquent lorsque le flux du fluide secondaire est interrompu, l'organe 220 déplace l'obturateur 210 dans le sens de la fermeture pour limiter également le flux du fluide primaire.

En revanche lors d'une augmentation du flux de fluide secondaire, la température du fluide primaire aura tendance à s'écarter de ladite température prédéterminée, à la sortie 124 de l'échangeur 100. Par conséquent l'organe 220 déplace alors l'obturateur 210 dans le sens de l'ouverture de telle sorte que le fluide primaire soit maintenu à ladite température prédéterminée et le fluide secondaire soit maintenu à la température de consigne.

Et l'on comprend que du fait que l'organe 220 est baigné en permanence par un filet continu du fluide primaire, la réaction de la vanne 200 aux fluctuations du fluide secondaire est quasi instantanée.

De ce fait la présente invention conduit à une régulation très précise à la fois de la température du fluide primaire et de la température du fluide secondaire. Elle conduit aussi à une économie du fluide primaire puisque l'écoulement de celui-ci est limité à la voie de dérivation dés que le flux du fluide secondaire est interrompu.

On retrouve sur la figure 2 annexée un échangeur de chaleur 100 et une vanne 200 conformes aux dispositions qui ont été décrites précédemment.

Selon la variante de réalisation représentée sur la figure 2, l'entrée 122 de l'échangeur 100 est équipée d'un régulateur de pression 300 et d'une vanne 310, telle qu'une vanne trois voies, permettant la purge du circuit primaire 120 de l'échangeur 100.

En outre l'installation de la figure 2 comprend un clapet unidirectionnel 320 monté en dérivation de la vanne 200, entre la sortie de celle-ci et la voie de dérivation 250. Le clapet 320 est fermé en fonctionnement normal de l'installation tant que le circuit primaire 120 est sous pression. En revanche le clapet 320 peut s'ouvrir pour garantir la purge du circuit primaire 120, y compris en cas de blocage intempestif de la vanne 200, lorsque la vanne 310 est commandée pour isoler le circuit primaire 120 de l'échangeur et le réseau 450, afin de relier ledit circuit primaire 120 à l'air libre. Le clapet 320 est alors passant dans le sens sortie de la vanne 200 vers la voie de dérivation 250, pour favoriser la purge du circuit primaire 120.

L'installation conforme à la présente invention trouve avantageusement application dans la réalisation de systèmes de refroidissement du lait du type décrit dans les documents FR-A-2 532 154 et FR-A-2 526 145.

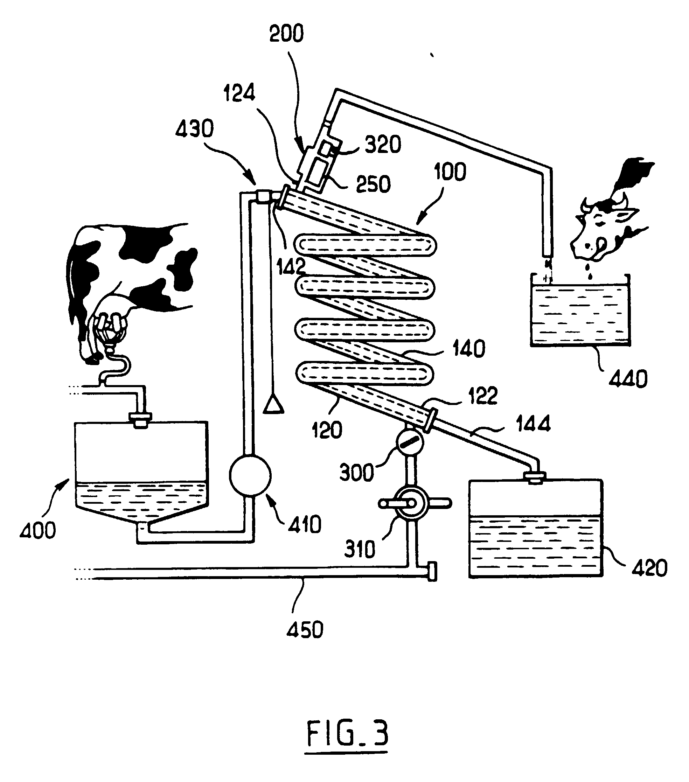

A cet effet comme représenté sur la figure 3 annexée, le circuit secondaire 140 de l'échangeur 100 peut recevoir avantageusement du lait provenant de la traite et transitant par une cuve de réception provisoire 400, le lait étant dirigé séquentiellement de la cuve 400, par une pompe 410, vers le circuit secondaire 140 de l'échangeur 100 lorsque des capteurs détectent que le niveau de lait dans ladite cuve 400 atteint un seuil prédéterminé.

Dans ce contexte le fluide primaire est un fluide de refroidissement. Plus précisément il est formé d'eau, par exemple l'eau du réseau 450. Et l'eau du circuit primaire réchauffée à température constante régulée, lors de son passage dans l'échangeur 100, est de préférence récupérée dans une cuve 440 pour abreuver les animaux.

Sur la figure 3 on a représenté sous la référence 420 une cuve de stockage du lait à la sortie de l'échangeur 100, et sous la référence 430 une prise d'air à commande manuelle placée sur l'entrée de la voie secondaire 140 de l'échangeur, laquelle entrée coïncide avec la partie supérieure de l'échangeur 100, pour permettre la purge de ladite voie secondaire 140.

Pour le reste l'installation représentée sur la figure 3 annexée est conforme à l'enseignement des documents FR-A-2 532 154 et FR-A-2 526 145.

La Demanderesse a déterminé qu'il était particulièrement important d'abreuver les animaux après la traite avec de l'eau à température régulée avec précision, plus précisément de l'eau comprise entre 20°C et 25°C.

Par rapport à l'état de la technique connu, la présente invention offre notamment les avantages suivants. Elle évite l'utilisation d'électricité, elle présente une réaction quasi-instantanée, elle permet des économies de fluide primaire, elle garantit une température régulée de sortie pour le fluide primaire, elle évite tout risque de gel, enfin elle est simple, fiable et économique.

En particulier la réalisation de la voie de dérivation 250 peut faire l'objet de diverses variantes de réalisation. Cette voie 250 peut être formée par exemple d'un simple perçage dans le carter de la vanne 200, en dérivation de l'obturateur 210, en regard de la sortie 124 de l'échangeur 100.

## Revendications

1. Installation d'échange thermique assurant le refroidissement contrôlé d'un fluide secondaire constitué de lait issu de la traite d'animaux tout en réchauffant un fluide primaire constitué d'eau, comportant :
- un échangeur de chaleur (100) comprenant deux circuits (120, 140) en relation d'échange thermique recevant respectivement l'eau et le lait,
- une vanne mécanique de régulation thermostatique (200) placée sur le et au plus près de la sortie du circuit (120) d'eau sur l'échangeur de chaleur, laquelle vanne (200) comprend un obturateur régulateur de débit (210) de l'eau sortant de l'échangeur (100),
caractérisée :
- par le fait que l'obturateur régulateur de débit (210) est piloté par un organe (220) à géométrie variable thermosensible,
- par une voie (250) raccordée sur le circuit d'eau (120) en dérivation de l'obturateur régulateur de débit (210), de sorte que ledit organe (220) à géométrie variable thermosensible soit placé et baigné en permanence dans un écoulement de l'eau traversant l'échangeur (100), et la voie de dérivation (250),
- et par le fait que l'installation comporte également une cuve (440) de récupération de l'eau réchauffée et régulée en température, et de mise à disposition des animaux de cette eau régulée en température pour les abreuver, directement en aval de ladite vanne (200).

2. Installation selon la revendication 1 caractérisée par le fait que la voie (250) raccordée sur le circuit d'eau (120) en dérivation de l'obturateur régulateur de débit (210) est formée d'un perçage ménagé dans le carter de ladite vanne (200), en regard de la sortie de l'échangeur (100).

3. Installation selon l'une des revendications 1 à 2 caractérisée par le fait qu'elle comprend en outre un clapet unidirectionnel (320) placé en dérivation de la vanne (200), pour faciliter la purge de l'eau.

4. Installation selon l'une des revendications 1 à 3 caractérisée par le fait que la vanne (200) comprend des moyens de réglage de sa température de sortie.

5. Installation selon l'une des revendications 1 à 4 caractérisée par le fait que l'échangeur (100) comprend deux tubes concentriques en spirale (120, 140).

6. Installation selon l'une des revendications 1 à 5 caractérisée par le fait qu'elle comprend une vanne trois voies de purge (310) en entrée du circuit d'eau (120).

7. Installation selon l'une des revendications 1 à 6 caractérisée par le fait qu'elle comprend un régulateur de pression en entrée du circuit d'eau (120).

8. Application de l'installation conforme à l'une des revendications 1 à 7 au refroidissement du lait provenant de la traite caractérisée en ce que la cuve (440) de récupération de l'eau réchauffée et régulée en température et de mise à disposition des animaux de cette eau régulée en température pour les abreuver, est utilisée pour abreuver les animaux après la traite.

9. Application selon la revendication précédente caractérisée par le fait que la vanne (200) est réglée pour définir une température de sortie d'eau comprise entre 20°C et 25°C.

## Patentansprüche

1. Wärmetauscheranlage zur kontrollierten Kühlung einer Sekundärflüssigkeit, gebildet durch frisch gemolkene Tiermilch, wobei eine Primärflüssigkeit, gebildet durch Wasser, erwärmt wird, umfassend:
- einen Wärmetauscher (100) mit zwei Kreisen bzw. Leitungen (120, 140), zwischen denen der Wärmeaustausch stattfindet und in denen jeweils das Wasser bzw. die Milch fließt,
- ein thermostatisches Regelventil (200), das sich am Ausgang oder nahe dem Ausgang der Wasserleitung (120) des Wärmetauschers befindet, wobei dieses Ventil (200) eine Verschluss-/Durchflussmengenregler-Vorrichtung (210) für das den Wärmetauscher (100) verlassende Wassers umfasst,
**dadurch gekennzeichnet,**
- dass die Verschluss-/Durchflussmengenregler-Vorrichtung (210) durch ein Organ (220) mit thermosensibler variabler Geometrie gesteuert wird,
- dass die Wasserleitung (120) einen die Verschluss-/Durchflussmengenregler-Vorrichtung (210) umgehenden Bypass (250) umfasst, sodass das genannte Organ (220) mit der thermosensiblen variablen Geometrie sich permanent in einer Strömung des den Wärmetauscher (100) und den Bypass (250) durchquerenden Wassers befindet und von diesem umspült wird,
- und dadurch, dass die Anlage auch einen Trog (440) zur Rückgewinnung bzw. Aufnahme des erwärmten und temperaturgeregelten Wassers umfasst, und dass dieses temperaturgeregelte Wasser dazu dient, die Tiere zu tränken, direkt hinter dem genannten Ventil (220).

2. Anlage nach Anspruch 1, dadurch gekennzeichnet, dass der an die Wasserleitung (120) angeschlossene, die Verschluss-/Durchflussmengenregler-Vorrichtung (210) umgehende Bypass (250) durch eine in dem Gehäuse des genannten Ventils (200) gegenüber dem Ausgang des Wärmetauschers (100) vorgesehene Bohrung gebildet wird.

3. Anlage nach einem der Ansprüche 1 oder 2, dadurch gekennzeichnet, dass sie außerdem ein Ventil mit einer Richtung (320) umfasst, das eine Abzweigung des Ventils (200) bildet, um die Entleerung des Wasser zu erleichtern.

4. Anlage nach einem der Ansprüche 1 bis 3, dadurch gekennzeichnet, dass das Ventil (200) Einrichtungen zur Regelung seiner Ausgangstemperatur umfasst.

5. Anlage nach einem der Ansprüche 1 bis 4, dadurch gekennzeichnet, dass der Wärmetauscher (100) zwei spiralförmige konzentrische Rohre (120, 140) umfasst.

6. Anlage nach einem der Ansprüche 1 bis 5, dadurch gekennzeichnet, dass sie am Eingang der Wasserleitung (120) ein Dreiwege-Entleerungsventil (310) umfasst.

7. Anlage nach einem der Ansprüche 1 bis 6, dadurch gekennzeichnet, dass sie am Eingang der Wasserleitung (120) einen Druckregulator umfasst.

8. Anwendung der Anlage nach einem der Ansprüche 1 bis 7 zum Kühlen von gemolkener Milch, dadurch gekennzeichnet, dass der Trog (440) zur Aufnahme des erwärmten und temperaturgeregelten, zum Tränken der Tiere verfügbaren Wassers dazu benutzt wird, die Tiere nach dem Melken zu tränken.

9. Anwendung der Anlage nach dem vorangehenden Anspruch, dadurch gekennzeichnet, dass das Ventil (200) so geregelt wird, dass die Wasser-Ausgangstemperatur zwischen 20°C und 25°C enthalten ist.

## Claims

1. A heat exchange installation ensuring the controlled cooling of a secondary fluid constituted by milk coming from milking animals while heating a primary fluid constituted by water, the installation including:
a heat exchanger (100) comprising two circuits (120, 140) in heat exchange relationship respectively receiving water and milk; and
a mechanical thermostatic regulator valve (200) placed on the water circuit (120) on the heat exchanger and as close as possible to the outlet thereof, which regulator valve (200) includes a flow-rate regulating shutter (210) for regulating the flow rate of the water leaving the heat exchanger (100),
the installation being characterized :
by the fact that the flow-rate regulating shutter (210) is controlled by a temperature-sensitive variable-geometry member (220);
by the fact that a path (250) is connected to the water circuit (120) in parallel with the flow-rate regulating shutter (210) such that said temperature-sensitive variable-geometry member (220) is placed in and is permanently immersed in a flow of water passing through the heat exchanger (100), and the parallel path (250); and
by the fact that the installation also includes a vessel (440), directly downstream from said valve (200), for recovering the heated and temperature-regulated water and for making said temperature-regulated water available for the animals in order to water them.

2. An installation according to claim 1, characterized by the fact that the path (250) connected on the water circuit (120) in parallel with the flow-rate regulating shutter (210) is formed by a hole formed through the case of said regulator valve (200), facing the outlet of the heat exchanger (100).

3. An installation according to claim 1 or 2, characterized by the fact that it further includes a non-return valve (320) placed in parallel with the regulator valve (200) to facilitate purging the water.

4. An installation according to any one of claims 1 to 3, characterized by the fact that the regulator valve (200) includes means for adjusting its outlet temperature.

5. An installation according to any one of claims 1 to 4, characterized by the fact that the heat exchanger (100) comprises two concentric tubes in a spiral (120; 140).

6. An installation according to any one of claims 1 to 5, characterized by the fact that it includes a three-port purge valve (310) at the inlet to the water circuit (120).

7. An installation according to any one of claims 1 to 6, characterized by the fact that it includes a pressure regulator at the inlet to the water circuit (120).

8. The use of the installation according to any one of claims 1 to 7 in cooling milk coming from milking, the use being characterized in that the vessel (440) for recovering the heated and temperature-regulated water and for making said temperature-regulated water available for the animals in order to water them is used to water the animals after milking.

9. A use according to the preceding claim, characterized by the fact that the regulator valve (200) is adjusted to define an outlet temperature for the water lying in the range 20°C to 25°C.
